# EUROPÄISCHE PATENTSCHRIFT

(11) **EP 0 870 145 B1**
(45) Veröffentlichungstag und Bekanntmachung des Hinweises auf die Patenterteilung: **27.03.2002**
(21) Anmeldenummer: 96944070.0
(22) Anmeldetag: 24.12.1996
(51) Int. Cl.: F16L 21/02, F16L 13/11, G01M 3/28

(54) **BETON-, STEINZEUG- ODER GUSSROHR**
CONCRETE, STONEWARE OR CAST PIPE
TUYAU EN BETON, EN GRES-CERAME OU EN FONTE

(30) Priorität: 18.01.1996 DE 19601652
(43) Veröffentlichungstag der Anmeldung: 14.10.1998
(73) Patentinhaber: RG Rohrgruppe GmbH & Co. KG, 45711 Datteln (DE)
(72) Erfinder: LAMMERING, Thomas, D-33335 Gütersloh (DE)
(74) Vertreter: Kaewert, Klaus
(86) Internationale Anmeldenummer: EP9605841
(87) Internationale Veröffentlichungsnummer: WO9726478

(56) Entgegenhaltungen:
- EP-A- 0 677 690
- DE-A- 4 236 368
- GB-A- 2 005 036
- US-A- 4 741 561

## Beschreibung

Die Erfindung betrifft eine Rohrverbindung einer im Baugrund verlegten Abwasserleitung aus Beton-, Steinzeug- oder Gußrohr mit Rohrspitzende und Rohrglocke.

Solche Verbindungen werden als Muffenverbindungen bezeichnet und sind z.B. aus der EP 0677690 A1 bekannt. Die bekannte Muffenverbindung zeigt zwei Dichtungsringe, wobei der Zwischenraum zwischen den Dichtungsringen mit Dichtungsmittel beaufschlagbar ist. Zur Zuführung des Dichtungsmittels ist ein schlauchförmiger Hohlraum vorgesehen.

Die Erfindung hat sich die Aufgabe gestellt, die bekannte Entwicklung zu verbessern. Dabei geht die Erfindung von der Überlegung aus, daß der Zwischenraum zwischen den Abdichtung nicht der alleinige Dichtungsraum sein muß.

Mit den Merkmalen der Patentansprüche wird eine umweltsichere Abwasserleitung mit Betonrohren geschaffen, die es gestattet, die mögliche Leckage zu erkennen, die Leckstelle zu orten und abzudichten. Damit ist ein hochwertiger Schutz der Umwelt sichergestellt und sind Vorkehrungen gegen die ungewollte Zerstörung benachbarter Leitungen und Kabel aufgrund der meist unvollständigen Leitungsbestandspläne getroffen.

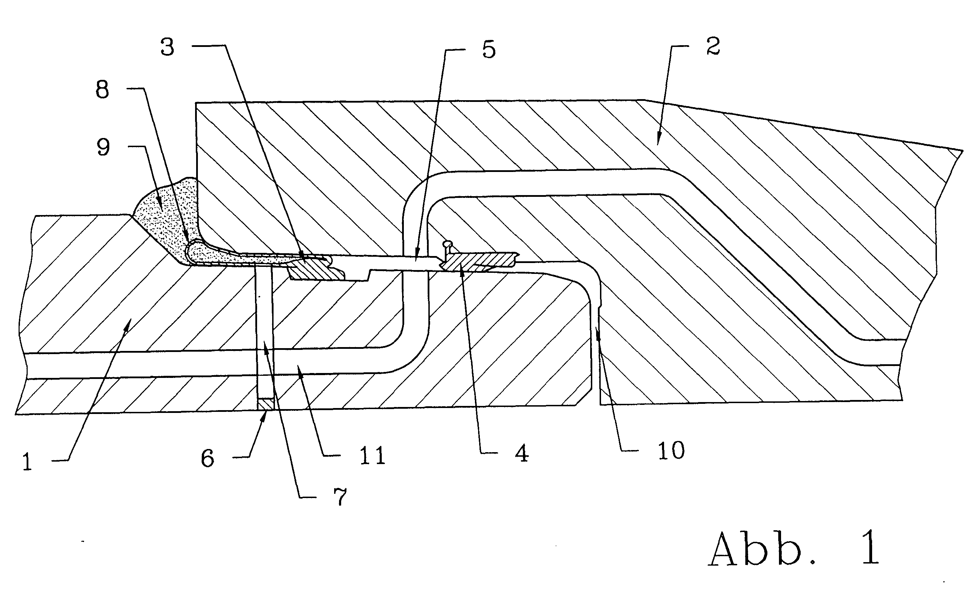

Die Erfindung ergibt sich aus den Patentansprüchen und wird nachstehend anhand der Abbildungen näher erläutert. Die **Abbildungen 1 bis 3** zeigen den Längsschnitt durch die Wand einer Verbindung von Betonrohren. In den Abbildungen ist die Außenseite des Rohres oben und die Innenseite unten.

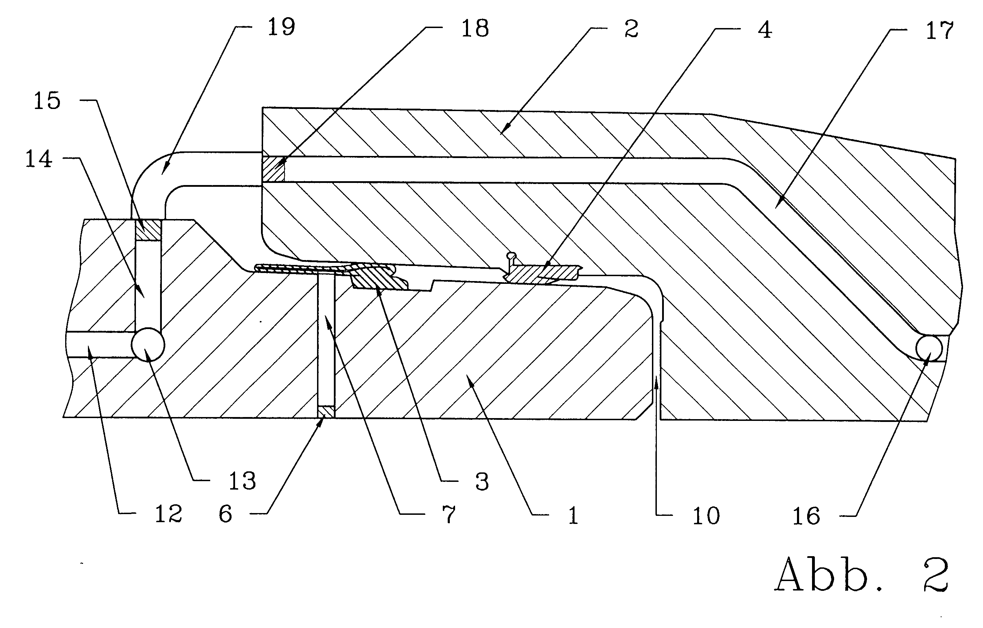

In **Abbildung 1** ist eine Vorrichtung zur Dichtung von Rohrverbindungen und Anschlußstücken sowie für die Förderung und gerichtete Verteilung von Verpreßmaterial in den Dichtflächen und in den umgebenden Baugrund dargestellt. Diese besteht aus einer vorzugsweise auf dem Rohrspitzende 1 befestigten, aktivierbaren Schlauchdichtung 3 und einer vorzugsweise in der Rohrglocke 2 befindlichen, nicht aktivierbaren Gleitringdichtung 4. Durch die beiden Dichtungen wird ein umlaufender Prüfraum 5 gebildet.
Die beiden Dichtungen sind in ihrer Anordnung und Gestalt so konzipiert, daß die aktivierbare Schlauchdichtung 3 gegen infiltrierendes Grund- und Schichtenwasser dichtet und die nicht aktivierbare Gleitringdichtung 4 eine Exfiltration von Abwasser aus dem Kanalinnenraum in den umgebenden Baugrund verhindern soll.
Bei Erstinbetriebnahme ist ein Aktivieren der Schlauchdichtung 3 nicht notwendig, da beide Dichtungen vorzugsweise selbstdichtend ausgeführt sind. Eine noch nicht aktivierte Schlauchdichtung 3 ist aus Abbildung 2 ersichtlich.
Treten z.B. durch geologische Veränderungen des Baugrundes oder durch dynamische Verkehrsbelastungen Lageabweichungen und Abwinklungen in den Rohrverbindungen auf, die zum Versagen einer oder beider Dichtungen führen, kann durch eine gezielte Aktivierung der Schlauchdichtung 3 und/oder durch den Verschluß des Muffenspaltes 10 eine dauerhafte Nachdichtung erreicht werden.
Die aktivierbare Schlauchdichtung 3 besitzt zum Nachdichten eine oder mehrere Zuführungen in der Form, daß über eine abdeckbare, den aggressiven Bedingungen des Kanalinnenraums widerstandsfähige, den Rohrquerschnitt nicht beeinträchtigende, für eine Kopplung mit einem Kanalroboter geeignete Befüllvorrichtung 6 ein geeignetes Verpreßmaterial mit einem definierten Mindestdruck über eine Zuführleitung oder einen Zuführkanal 7 ins Innere der aktivierbaren Schlauchdichtung 3 geleitet wird.

Die aktivierbare Schlauchdichtung 3 ist so ausgeführt, daß sich in ihrem Schlauchteil, über den gesamten Umfang verteilt, Perforationen 8 befinden. Diese Perforationen 8 können offen sein oder sich erst bei einem spezifischen Mindestdruck öffnen.
Die Befüllvorrichtungen 6 und der Zuführkanal 7 befinden sich am Umfang des Rohrkörpers verteilt in Positionen, die beim Nachdichtvorgang durch Aktivieren der Schlauchdichtung 3 ein leichtes Austreten des Verpreßmaterials in den Spalt zwischen Rohrspitzende 1 und Rohrglocke 2 in der Art ermöglichen, daß das Verpreßmaterial aus den Perforationen 8 austritt, sich mit dem umgebenden Baugrund verbindet und einen offenen oder geschlossenen dauerelastischen Ring 9 vor dem Spalt bildet.
Die Nachdichtung einer Leckage der Gleitringdichtung 4 erfolgt über geeignete Vorrichtungen vom Rohrinneren her durch Verschließen des Muffenspalts 10.
Bei den Verbindungen von Betonrohr und Schacht werden Übergangsgelenke verwendet, deren Dichtungssystem den oben beschriebenen entspricht. Die Schächte selbst können in die Überwachung voll integriert werden oder haltungsweise überbrückt ausgeführt sein. Bei der vollständigen Integration können zwischen den Schachtringen ebenfalls Doppeldichtungssysteme zur Schaffung von umlaufenden Prüfräumen integriert werden.

Als Nachdichtmittel zur Beseitigung von Leckagen im Bereich der Rohrverbindung wird ein geeignetes Verpreßmaterial verwendet. Dabei handelt es sich um handelsübliche überwiegend organische oder anorganische Gemische von meist zwei Komponenten wie z.B. PUR A oder B von Bayer, Scotch-Seal von 3M, AC 400 der Geochemical Corporation, Addiment u.a.m.

Das Verpreßmaterial gelangt über die Befüllvorrichtung 6 und den Zuführkanal 7 zur aktivierbaren Schlauchdichtung 3 und über die am Umfang verteilten Perforationen 8 in den umgebenden Baugrund und bildet dort eine abdichtende, wasserundurchlässige Schicht, die die Leckstelle gegen Grund- und Schichtenwasser sowie gegen alle Arten von Abwässern dauerhaft verschließt.
Die im Baugrund durch Lageabweichungen im Bereich der Rohrverbindung vorhandenen Hohlräume werden auch bei wassergesättigtem Bodenmaterial ausgefüllt und verfestigt.
Der entstehende Verbundstoff aus Verpreßmaterial und umgebenden Erdreich verbleibt in einem dauerelastischen Zustand. Auf den Rohrkörper wirkende Querkräfte in Form von Bettungspannungen mit einer Mindestdruckfestigkeit von 0,1 N/mm² können aufgenommen werden und tragen zu einer Reststabilisierung des umgebenden Baugrundes bei.
Bei einer weiteren Zunahme der Lageabweichung oder Abwinklungen, z.B. durch erneute Bodensetzungen, werden Brüche und Risse in Rohrspitzende und Rohrglocke durch die wirkenden Querkräfte vermieden, indem der Verbundstoff innerhalb der Grenzen der Abwinkelbarkeit der Rohrverbindung beweglich bleibt, ohne die Dichtwirkung aufzuheben. Entstehende kleine Risse werden durch den Selbstheileffekt des Verpreßmaterials selbständig verschlossen.
Die abdichtenden und verfestigenden Eigenschaften des Verpreßmaterials sind über die Lebensdauer gleichbleibend und werden durch die innere und äußere Kanalumgebung nicht beeinflußt. Andererseits sind die chemischen Eigenschaften des Verpreßmaterials derart, daß eine Verträglichkeit bei Kontakt mit allen Materialien seiner Umgebung (Beton, Dichtungsmaterialien und Erdreich) besteht und in keiner Verwendungs- und Zustandsform umweltschädliche Substanzen enthalten sind oder gebildet werden.
Die chemischen und physikalischen Eigenschaften des Verpreßmaterials lassen bei erneuter Leckage eine mehrmalige Nachdichtung durch das Aktivieren der Schlauchdichtung 3 zu.
Das Verpreßmaterial gelangt z.B. im nichtbegehbaren Bereich über spezielle Kanalroboter zur Befüllvorrichtung 6 und im begehbaren Bereich durch Aktivieren der Schlauchdichtung 3 vor Ort.

Eine andere Ausgestaltung der Erfindung betrifft Vorrichtung und Verfahren für eine haltungsweise permanente oder periodische pneumatische Dichtheitskontrolle und Leckortung sowohl entlang des Rohrkörpers als auch im Bereich von Rohrverbindungen und Anschlußstücken ohne aufwendiges Befahren des Kanals mit TV-Kamera und Muffenprüfgeräten.

Die Dichtheitskontrolle erfolgt mittels Luftüberdruckprüfung in Anlehnung an die EN DIN 1610.
Die Dichtheitskontrolle und die Leckortung können getrennt als Überwachung der Rohrverbindungen und als Rohrkörperüberwachung erfolgen oder als kombiniertes Überwachungssystem ausgeführt sein.

Die Überwachung der Rohrverbindungen erfolgt über einen umlaufenden Prüfraum 5 der durch die aktivierbare Schlauchdichtung 3 und die nicht aktivierbare Gleitringdichtung 4 gebildet wird. Darüber hinaus werden in der Rohrwandung ein oder mehrere korrosionsbeständige Prüfleitungen 11 zumindest in der 6- und 12-Uhr-Position des Rohrumfangs integriert, die in den umlaufenden Prüfraum 5 münden und so haltungsweise ein geschlossenes System bilden.
Zur haltungsweisen, permanenten oder periodischen Dichtheitskontrolle im Bereich der Rohrverbindung wird der gesamte Prüfraum zwischen zwei Schächten, bestehend aus Prüfleitungen 11 und umlaufenden Prüfräumen 5, mit einem Druck beaufschlagt, der mindestens 1 bar über dem Druck des durch das Rohr fließenden Frisch- oder Abwassers liegt.
Durch die haltungsweise Erfassung des Druckverlustes im gesamten Prüfraum zwischen zwei Schächten kann bei Kenntnis des zulässigen Druckabfalls eine Leckage im Bereich der Rohrverbindungen festgestellt werden.
Wurde eine Leckage ermittelt, kann durch ein Druckgradientenverfahren der Bereich, in dem sich eine undichte Rohrverbindung befindet, eingeengt und im Anschluß abgesperrt und mit Wasser oder Abwasser befüllt werden.

Der gesamte Prüfraum wird mit einem Druck von mindestens 1 bar beaufschlagt. Das Prüfmedium ist vorzugsweise Luft oder ein spezielles gasförmiges Medium, kann aber auch Wasser sein.
Zur Feinortung kann im abgesperrten und befüllten Kanal ein steuerbares Hydrofon verwendet werden, welches den Ort der größten Geräuschentwicklung genauestens bestimmt. Die Ortung einer Leckstelle kann ebenfalls von der Erdoberfläche oder im nicht befüllten Kanal mittels akustischer Ortungsverfahren oder bei Verwendung spezieller Gase als Prüfmedium mittels Meßverfahren der Radiometrie und üblicher Verfahren Dichtheitskontrolle an Gasleitungen erfolgen.
Die Nachdichtung eines Lecks im Bereich der Rohrverbindungen erfolgt dann nach dem oben beschriebenen Verfahren.

Für die Rohrkörperüberwachung, in **Abbildung 2** dargestellt, sind in der Wandung des Betonrohres an der Behelfsbewehrung mittels spezieller Distanzhalter Prüfkanäle 12 integriert, deren Anzahl eine Funktion der zu überwachenden Rohrkörperoberfläche darstellt und durch die Rohrstatik beeinflußt wird. Der Innendurchmesser der Prüfkanäle sollte mindestens 5 mm betragen. Für gleichbleibende Strömungsverhältnisse über die Lebensdauer der Betonrohre muß durch Verwendung spezieller Materialien Vorsorge getroffen werden.
Diese Prüfkanäle können längs des Rohrkörpers spiralförmig gewickelt oder gerade angeordnet sein und münden in eine im Rohrspitzende 1 umlaufende Ringleitung 13.
In die umlaufende Ringleitung 13 mündet ein Verbindungskanal 14 der zur Kopplungsstelle 15 am Rohrspitzende 1 vorzugsweise in der 12-Uhr-Position führt. Im Bereich der Rohrglocke 2 können die Prüfkanäle 12 in eine weitere umlaufende Ringleitung 16 münden, von der eine Verbindungsleitung 17, vorzugsweise ebenfalls in der 12-Uhr-Position, zu einer Kopplungseinrichtung 18 führt.
Die Verbindung der Rohrkörperüberwachung von Rohr zu Rohr erfolgt über die Kopplungsleitung 19. Die Kopplungsleitung 19 muß gegen alle Einflüsse des sie umgebenden Erdreiches widerstandsfähig sein und vor allem einen ausreichenden mechanischen Schutz aufweisen.
Zur haltungsweisen, permanenten oder periodischen Ermittlung von Leckagen am Rohrkörper wird der gesamte Prüfraum, bestehend aus den Prüfkanälen 12, den umlaufenden Ringleitungen 13 und 16, den Verbindungsleitungen 14 und 17 zu den Kopplungseinrichtungen 15 und 18, und die Kopplungsleitung 19 mit einem Druck von mindestens 0,2 bar beaufschlagt.

Ebenso wie das oben für die Überwachung der Rohrverbindungen beschrieben ist, können auch Undichtigkeiten im Rohrkörper durch Erfassung des Druckverlustes im gesamten Prüfraum bei Kenntnis des zulässigen Druckabfalls festgestellt werden. Zur Feinortung kann im abgesperrten und befüllten Kanal wiederum ein steuerbares Hydrofon verwendet werden, welches den Ort der größten Geräuschentwicklung genauestens bestimmt.

Durch die haltungsweise Erfassung des Druckverlustes im gesamten Prüfraum kann bei Kenntnis des zulässigen Druckabfalls eine Leckage im Rohrkörper festgestellt werden.
Wurde eine Leckage ermittelt, kommt analog zur Grobortung bei der Überwachung der Rohrverbindung das Druckgradientenverfahren zur Anwendung, welches in der DE-A-4 431 367 (veröffentlicht am 29.02.96) beschrieben ist.
Durch das Druckgradientenverfahren wird der Bereich, in dem sich eine Leckstelle befindet, eingeengt und im Anschluß dieser Bereich abgesperrt und mit Wasser oder Abwasser befüllt.
Der gesamte Prüfraum wird wie bei der Überwachung der Rohrverbindungen mit einem Druck von mindestens 1 bar beaufschlagt. Das Prüfmedium ist vorzugsweise Luft, kann aber auch Wasser oder ein spezielles gasförmiges Medium sein.
Zur Feinortung kann im abgesperrten und befüllten Kanal ein steuerbares Hydrofon verwendet werden, welches den Ort der größten Geräuschentwicklung genauestens bestimmt. Die Ortung einer Leckstelle kann ebenfalls von der Erdoberfläche oder im nicht befüllten Kanal mittels akustischer Ortungsverfahren oder, bei Verwendung spezieller Gase als Prüfmedium, mittels Meßverfahren der Radiometrie und üblicher Verfahren der Dichtheitskontrolle an Gasleitungen erfolgen.
Die Nachdichtung eines Lecks im Bereich des Rohrkörpers erfolgt mit an sich bekannten Verfahren der Sanierung von Leckagen für den begehbaren und nichtbegehbaren Kanalbereich.

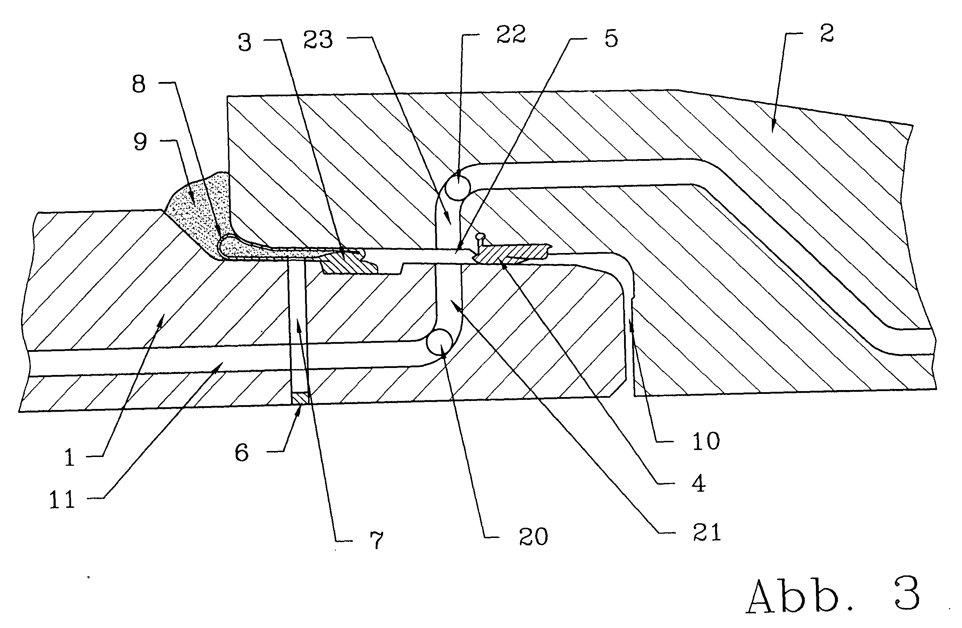

In **Abbildung 3** ist ein kombiniertes Überwachungssystem gemäß der Erfindung dargestellt, das die Eigenschaften der Muffenüberwachung und der Rohrkörperüberwachung zu einem einheitlichen Überwachungssystem zusammenfaßt.
Dazu werden ähnlich zur Rohrkörperüberwachung in der Wandung des Betonrohres an der Behelfsbewehrung mittels spezieller Distanzhalter Prüfkanäle 11 integriert, die ebenfalls längs des Rohrkörpers spiralförmig gewickelt oder gerade angeordnet sein können. Diese Prüfkanäle münden in Rohrspitzende 1 und Rohrglocke 2 entweder über die umlaufenden Ringleitungen 20 und 22 in den umlaufenden Prüfraum, gebildet durch die aktivierbare Schlauchdichtung 3 und die nicht aktivierbare Gleitringdichtung 4, oder werden jeweils direkt in den umlaufenden Prüfraum 5 geführt. Bei Anwendung der umlaufenden Ringleitungen 20 und 22 führen mehrere Verbindungskanäle 21 und 23 zum umlaufenden Prüfraum 5.
Zur haltungsweisen permanenten oder periodischen Ermittlung von Leckagen mittels kombinierten Überwachungssystem wird der gesamte Prüfraum, bestehend aus den Prüfkanälen 11, über die umlaufenden Prüfräume mit einem Druck von mindestens 0,2 bar beaufschlagt. Zusätzlich kommen noch die umlaufenden Ringleitungen 20 und 22 und die Verbindungsleitungen 21 und 23 hinzu.
Durch die haltungsweise Erfassung des Druckverlustes im gesamten Prüfraum kann bei Kenntnis des zulässigen Druckabfalls eine Leckage festgestellt werden, ohne eine Trennung der Leckarten vornehmen zu können.

Wurde eine Leckage ermittelt, so kommt analog zur Grobortung bei der Überwachung der Rohrverbindungen und der Rohrkörperüberwachung das oben erwähnte Druckgradientenverfahren zur Anwendung. Auch die Feinortung erfolgt in der gleichen Weise, wie das oben zur Überwachung der Rohrverbindungen und der Rohrkörper beschrieben ist.

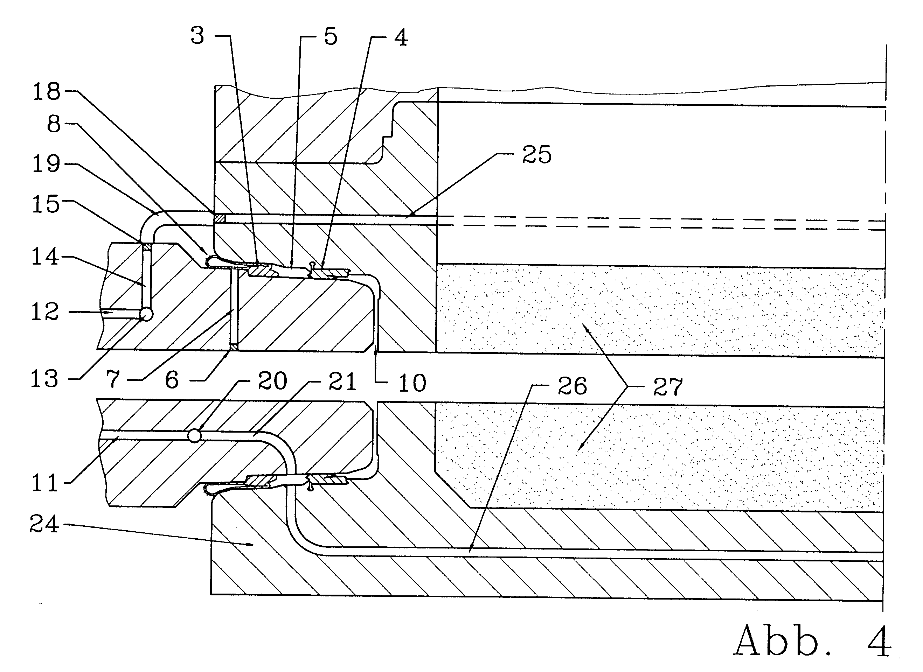

Die beschriebenen Verfahren der Dichtheitskontrolle und Leckortung sind auch bei Schächten, bestehend aus Schachtunterteil, Schachtringen und Schachtdeckel, anwendbar, wie **Abbildung 4** zeigt. Hier entspricht der seitliche Anschluß 24 des Schachtunterteils der Rohrglocke 2. Die übrigen Bezugszeichen haben die gleiche Bedeutung wie bei den Abbildungen 1 bis 3. Die Prüfkanäle 25 und 26 im Schachtunterteil und die Fließrinne 27 kommen hinzu.

Die Schächte können vollständig integriert oder überbrückt sein.

## Patentansprüche

1. Rohrverbindung einer im Baugrund verlegten Abwasserleitung aus Beton-, Steinzeug- oder Gußrohr mit Rohrspitzende (1) und Rohrglocke (2), enthaltend
einen umlaufenden Prüfraum (5) zwischen
einer Gleitringdichtung (4) und
einer aktivierbaren Schlauchdichtung (3),
**dadurch gekennzeichnet, daß** aus der aktivierbaren Schlauchdichtung (3) zur Nachdichtung im Falle einer Leckage im Bereich der Rohrverbindung ein Verpreßmaterial in den umgebenden Baugrund austreten kann.

2. Rohrverbindung nach Anspruch 1, **dadurch gekennzeichnet, daß** der Prüfraum (5) an eine Prüfleitung (11) angeschlossen ist.

3. Rohrverbindung nach Anspruch 1 oder 2, **dadurch gekennzeichnet, daß** die Schlauchdichtung (3) an ihrem Umfang Perforationen (8) aufweist.

4. Rohrverbindung nach einem der Ansprüche 1 bis 3, **dadurch gekennzeichnet, daß** die Schlauchdichtung (3) über einen Zuführkanal (3) an eine Befüllvorrichtung (6) angeschlossen ist.

5. Rohrverbindung nach einem der Ansprüche 1 bis 4, **dadurch gekennzeichnet, daß** die Schlauchdichtung (3) und/oder die Gleitringdichtung (4) selbstdichtend sind.

6. Rohrverbindung nach einem der Ansprüche 1 bis 5, **gekennzeichnet durch** in der Wandung angeordnete Prüfkanäle (12).

7. Rohrverbindung nach Anspruch 6, **dadurch gekennzeichnet, daß** die Prüfkanäle (12) längs des Rohrkörpers spiralförmig gewickelt oder gerade angeordnet sind.

8. Rohrverbindung nach Anspruch 6 oder 7, **dadurch gekennzeichnet, daß** im Rohrspitzende (1) eine mit einem Prüfkanal (12) verbundene Ringleitung (13) angeordnet ist.

9. Rohrverbindung nach einem der Ansprüche 6 bis 8, **dadurch gekennzeichnet, daß** in der Rohrglocke (2) eine mit einem Prüfkanal (17) verbundene Ringleitung (16) angeordnet ist.

10. Rohrverbindung nach einem der Ansprüche 6 bis 9, **dadurch gekennzeichnet, daß** zur Verbindung der Prüfkanäle (12) und (17) Kopplungseinrichtungen (15) und (18) und eine Kopplungsleitung (19) vorgesehen sind.

11. Verfahren zur Dichtheitskontrolle und Abdichtung der Rohrverbindung nach Anspruch 1, wobei der umlaufende Prüfungraum (5) über eine Prüfleitung (11) mit einem Druck von mindestens 0,2 bar beaufschlagt wird und durch Messung des Druckverlustes eine Undichtigkeit festgestellt und geortet wird, worauf die Schlauchdichtung (3) aktiviert wird.

12. Verfahren nach Anspruch 11, **dadurch gekennzeichnet, daß** die Schlauchdichtung (3) durch Zufuhr eines injizierbaren, dauerelastisch erhärtenden Verpreßmaterials aktiviert wird.

13. Verfahren nach Anspruch 11 oder 12, **dadurch gekennzeichnet, daß** das Verpreßmaterial bei Aktivierung der Schlauchdichtung (3) durch Perforationen (8) austreten kann, die über den Umfang verteilt sind.

14. Verfahren nach einem der Ansprüche 11 bis 13, **dadurch gekennzeichnet, daß** das Verpreßmaterial der Schlauchdichtung (3) über einen Zuführkanal (7) und eine Befüllvorrichtung (6) zugeführt wird.

15. Verfahren nach einem der Ansprüche 11 bis 14, **dadurch gekennzeichnet, daß** die äußere Dichtung die aktivierbare Schlauchdichtung (3) und die innere Dichtung eine Gleitringdichtung ist, so daß durch Austritt des Verpreßmaterials aus den Perforationen (8) in den umgebenden Baugrund ein dauerelastischer Ring (9) vor dem Spalt gebildet werden kann.

16. Verfahren nach einem der Ansprüche 11 bis 15, **dadurch gekennzeichnet, daß** die Druckbeaufschlagung zur Erkennung und Ortung der Undichtigkeit(en) permanent oder periodisch erfolgt.

17. Verfahren nach einem der Ansprüche 11 bis 16, **dadurch gekennzeichnet, daß** die Ortung der Undichtigkeit(en) in zwei Schritten, nämlich einer Grob- und Feinortung, durchgeführt wird.

18. Verfahren nach einem der Ansprüche 11 bis 17, **dadurch gekennzeichnet, daß** zur Rohrkörperüberwachung in der Wandung des Betonrohres angeordnete Prüfkanäle (11;12), eine damit verbundene Ringleitung (13;20) im Rohrspitzende (1) und eine Ringleitung (16; 22) in der Rohrglocke (2) mit einem Druck von mindestens 0,2 bar beaufschlagt werden und durch Messung des Druckverlustes eine Undichtigkeit festgestellt, geortet und abgedichtet wird.

19. Verfahren nach Ansprüch 18, **dadurch gekennzeichnet, daß** die Dichtheitskontrolle und Leckortung getrennt als Überwachung der Rohrverbindung und als Rohrkörperüberwachung oder als kombiniertes Überwachungssystem durchgeführt werden.

## Claims

1. Pipe joint for a sewer laid in foundation soil and comprising concrete, vitrified clay or cast iron pipe having a spigot (1) and a bell (2), comprising
a circumferential test space (5) between
a slide ring seal (4) and
an activatable tubular seal (3),
**characterized in that**, for the purpose of resealing in the event of a leak in the region of the pipe joint, a compressed material may pass out of the activatable tubular seal (3) into the surrounding foundation soil.

2. Pipe joint according to claim 1, **characterized in that** the test space (5) is connected to a test line (11).

3. Pipe joint according to claim 1 or 2, **characterized in that** the tubular seal (3) at its periphery has perforations (8).

4. Pipe joint according to one of claims 1 to 3, **characterized in that** the tubular seal (3) is connected by a feed channel (7) to a filling apparatus (6).

5. Pipe joint according to one of claims 1 to 4, **characterized in that** the tubular seal (3) and/or the slide ring seal (4) are self-sealing.

6. Pipe joint according to one of claims 1 to 5, **characterized by** test channels (12) disposed in the wall.

7. Pipe joint according to claim 6, **characterized in that** the test channels (12) are wound spirally or disposed in a straight manner along the pipe body.

8. Pipe joint according to claim 6 or 7, **characterized in that** disposed in the spigot (1) is a circular line (13) connected to a test channel (12).

9. Pipe joint according to one of claims 6 to 8, **characterized in that** disposed in the bell (2) is a circular line (16) connected to a test channel (17).

10. Pipe joint according to one of claims 6 to 9, **characterized in that** coupling devices (15) and (18) and a coupling line (19) are provided for connecting the test channels (12) and (17).

11. Method of leak testing and sealing the pipe joint according to claim 1, whereby a pressure of at least 0.2 bar is admitted via a test line (11) into the circumferential test space (5) and by measuring the pressure loss a leak is detected and located, whereupon the tubular seal (3) is activated.

12. Method according to claim 11, **characterized in that** the tubular seal (3) is activated by feeding an injectable compressed material, which hardens in a permanently elastic manner.

13. Method according to claim 11 or 12, **characterized in that** the compressed material may, upon activation of the tubular seal (3), pass through perforations (8) which are distributed over the periphery.

14. Method according to one of claims 11 to 13, **characterized in that** the compressed material is supplied to the tubular seal (3) via a feed channel (7) and a filling apparatus (6).

15. Method according to one of claims 11 to 14, **characterized in that** the outer seal is the activatable tubular seal (3) and the inner seal is a slide ring seal so that by virtue of the compressed material passing out of the perforations (8) into the surrounding foundation soil a permanently elastic ring (9) may be formed in front of the gap.

16. Method according to one of claims 11 to 15, **characterized in that** the pressurization for detection and location of the leak(s) is effected permanently or periodically.

17. Method according to one of claims 11 to 16, **characterized in that** the location of the leak(s) is effected in two steps, namely rough location and precise location.

18. Method according to one of claims 11 to 17, **characterized in that**, for checking the pipe body, a pressure of at least 0.2 bar is admitted into inspection channels (11; 12) disposed in the wall of the concrete pipe, into a circular line (13; 20) connected thereto in the spigot (1) and into a circular line (16; 22) in the bell (2) and by measuring the pressure loss a leak is detected, located and sealed.

19. Method according to claim 18, **characterized in that** the leak testing and leak location are effected separately as monitoring of the pipe joint and as monitoring of the pipe body or as a combined monitoring system.

## Revendications

1. Raccord de tuyaux d'une canalisation d'eaux usées posée dans le sol, constituée d'un tuyau de béton, de grés ou de fonte, présentant une extrémité de tuyau rétrécie en pointe (1) et un évasement de tuyau en manchon (2), le raccord comportant une chambre de test (5) périphérique entre une garniture d'étanchéité à anneau glissant (4) et un joint d'étanchéité à vessie (3) pouvant être activé, **caractérisé en ce qu'**un matériau d'injection sous pression peut s'échapper dans le sol cnvironnant, à partir du joint d'étanchéité à vessie (3) pouvant être activé, pour une ré-étanchéification en cas de fuite dans la région du raccord de tuyaux.

2. Raccord de tuyaux selon la revendication 1, **caractérisé en ce que** la chambre de test (5) est raccordée à une conduite de test (11).

3. Raccord de tuyaux selon la revendication 1 ou 2, **caractérisé en ce que** le joint d'étanchéité à vessie (3) présente des perforations (8) à sa périphérie.

4. Raccord de tuyaux selon l'une des revendications 1 à 3, **caractérisé en ce que** le joint d'étanchéité à vessie (3) est raccordé à un dispositif de remplissage (6) par l'intermédiaire d'un canal d'alimentation (7).

5. Raccord de tuyaux selon l'une des revendications 1 à 4, **caractérisé en ce que** le joint d'étanchéité à vessie (3) et/ou la garniture d'étanchéité à anneau glissant (4) sont du type auto-étanchéifiant.

6. Raccord de tuyaux selon l'une des revendications 1 à 5, **caractérisé par** des canaux de test (12) disposés dans la paroi.

7. Raccord de tuyaux selon la revendication 6, **caractérisé en ce que** les canaux de test (12) sont disposés enroulés en spirale ou de manière rectiligne, le long du corps du tuyau.

8. Raccord de tuyaux selon la revendication 6 ou 7, **caractérisé en ce que** dans l'extrémité de tuyau rétrécie en pointe (1) est disposée une conduite annulaire (13) reliée à un canal de test (12).

9. Raccord de tuyaux selon l'une des revendications 6 à 8, **caractérisé en ce que** dans l'évasement de tuyau en manchon (2) est disposée une conduite annulaire (16) reliée à un canal de test (17).

10. Raccord de tuyaux selon l'une des revendications 6 à 9, **caractérisé en ce que** pour raccorder les canaux de test (12) et (17), sont prévus des dispositifs de couplage (15) et (18) et une conduite de couplage (19).

11. Procédé de contrôle de l'étanchéité et de réalisation de l'étanchéité du raccord de tuyaux selon la revendication 1, selon lequel on alimente la chambre de test (5) périphérique, par l'intennédiaire d'une conduite de test (11), avec une pression d'au moins 0,2 bar, et on détecte et localise un défaut d'étanchéité par mesure de la perte de pression, suite à quoi on active le joint d'étanchéité à vessie (3).

12. Procédé selon la revendication 11, **caractérisé en ce que** le joint d'étanchéité à vessie (3) est activé par introduction d'un matériau d'injection sous pression pouvant être injecté et se solidifiant en restant élastique de manière permanente.

13. Procédé selon la revendication 11 ou 12, **caractérisé en ce que** le matériau d'injection sous pression, lors de l'activation du joint d'étanchéité à vessie (3), peut s'échapper par des perforations (8) qui sont réparties le long de la périphérie.

14. Procédé selon l'une des revendications 11 à 13, **caractérisé en ce que** le matériau d'injection sous pression du joint d'étanchéité à vessie (3) est introduit dans celui-ci par l'intermédiaire d'un canal d'alimentation (7) et d'un dispositif de remplissage (6).

15. Procédé selon l'une des revendications 11 à 14, **caractérisé en ce que** le joint d'étanchéité extérieur est constitué par le joint d'étanchéité à vessie (3) pouvant être activé, et le joint d'étanchéité intérieur par une garniture d'étanchéité à anneau glissant, de sorte que par échappement dans le sol environnant du matériau d'injection sous pression par les perforations (8), il est possible de former devant l'intcrsticc un anneau (9) à élasticité permanente.

16. Procédé selon l'une des revendications 11 à 15, **caractérisé en ce que** l'alimentation en pression pour lc repérage et la localisation du ou des défaut(s) d'étanchéité, se fait de manière permanente ou périodique.

17. Procédé selon l'une des revendications 11 à 16, **caractérisé en ce que** la localisation du ou dcs défaut(s) d'étanchéité est effectuée en deux étapes, à savoir une localisation grossière et une localisation fine.

18. Procédé selon l'une des revendications 11 à 17, **caractérisé en ce que** pour la surveillance du corps de tuyau, on alimente avec une pression d'au moins 0.2 bar des canaux de test (11 ; 12) disposés dans la paroi du tuyau de béton, une conduite annulaire (13 ; 20) reliée à ceux-ci, située dans l'extrémité de tuyau rétrécie en pointe (1), et une conduite annulaire (16 ; 22) située dans l'évasement de tuyau en manchon (2), et l'on détecte, localise et rend étanchc un défaut d'étanchéité, par mesure de la perte de pression.

19. Procédé selon la revendication 18, **caractérisé en ce que** le contrôle de l'étanchéité et la localisation des fuites sont effectués séparément, sous forme d'une surveillance du raccord de tuyaux et sous forme d'une surveillance du corps de tuyau, ou sous forme d'un système de surveillance combiné.
